# EUROPÄISCHE PATENTSCHRIFT

(11) **EP 0 668 094 B1**
(45) Veröffentlichungstag und Bekanntmachung des Hinweises auf die Patenterteilung: **26.08.1998**
(21) Anmeldenummer: 94116534.2
(22) Anmeldetag: 20.10.1994
(51) Int. Cl.: B01D 33/056

(54) **Filtrieranlage mit Abdichtvorrichtung für das Filterband**
Filtering device with sealing means for the filterband
Dispositif filtrant avec moyen d'étanchéité pour la bande filtrante

(30) Priorität: 16.02.1994 DE 4404854
(43) Veröffentlichungstag der Anmeldung: 23.08.1995
(73) Patentinhaber: HYDAC FILTERTECHNIK GmbH, D-66273 Sulzbach (DE)
(72) Erfinder: Teckentrup, Heinrich, D-66123 Saarbrücken (DE)
(74) Vertreter: Patentanwälte Bartels und Partner

(56) Entgegenhaltungen:
- FR-A- 2 068 188
- US-A- 4 242 205
- US-A- 4 514 301
- US-A- 4 661 251
- US-A- 4 880 538

## Beschreibung

Die Erfindung betrifft eine Filtrieranlage zum Abfiltrieren einer Flüssigkeit aus einer Suspension mit einem Sammelbehälter zur Aufnahme der Suspension, der über mindestens einen Durchgang mit einer Absaugkammer verbunden ist, in der ein Unterdruck erzeugbar ist, wobei der jeweilige Durchgang von einem endlosen Filterband abgedeckt ist, das mittels eines Antriebes in einer zumindest teilweise innerhalb des Sammelbehälters angeordneten Führung verfahrbar ist und wobei elastisch nachgiebige Dichtmittel vorhanden sind, die randseitig auf das Filterband einwirkend eine ungewollte Durchtrittsstelle für die Flüssigkeit zwischen dem Inneren des Sammelbehälters und der Absaugkammer dichtend verschließen.

Dahingehende Filtrieranlagen (DE-A- 39 10 930) dienen unter anderem dazu, verschmutzte Kühlschmierstoffflüssigkeit, die entweder direkt von einer Bearbeitungsmaschine oder über eine Rückpumpstation in den Sammelbehälter gelangt, von den bei der spanabhebenden Bearbeitung entstehenden Verschmutzungen, insbesondere von den Spänen, zu reinigen, damit der derart gereinigte Kühlschmierstoff an der jeweiligen Bearbeitungsmaschine wiederverwendbar ist. Auslösbar ist dieser Filtriervorgang mittels einer Absaugkammer, in der mittels einer Unterdruckeinrichtung ein Unterdruck erzeugbar ist, wobei die zurückgehaltenen Verschmutzungen, insbesondere in Form der Späne, mittels des Filterbandes aus dem Sammelbehälter abtransportiert werden.

Mit dieser bekannten Filtrieranlage ist es möglich, mit dem als Endlosband ausgebildeten Filterband mit einer einstellbaren, kontinuierlichen Geschwindigkeit über den Durchgang zwischen Sammelbehälter und Absaugkammer hinwegzufahren, ohne daß die Unterdruckeinrichtung hierzu abgeschaltet werden müßte, d.h. ein kontinuierlicher Filtriervorgang ist möglich. An der Übergangsstelle zwischen dem Inneren des Sammelbehälters und der Absaugkammer kann es jedoch am randseitigen Bereich des Filterbandes ungewollt zu einer Durchtrittsstelle kommen, über die die zu filtrierende Suspension unmittelbar in die Absaugkammer gelangen kann, was die Filtrierleistung und das Filtrierergebnis der Anlage beeinträchtigt.

Es ist zwar bei einer gattungsgemäßen Filtrieranlage nach der US-A-4 390 428 bereits vorgeschlagen worden, diese ungewollte Durchtrittsstelle mit einem aufblasbaren Schlauch zu verschließen, der das Filterband dichtend gegen die ihm zugewandte Führung preßt; allein mit dieser bekannten Anordnung ist das Abdichten des Filterbandes nur in seiner Ruhestellung möglich, so daß ein kontinuierlicher Betrieb der Anlage ausgeschlossen ist. Kommt darüber hinaus in die angesprochene Durchtrittsstelle ein Metallspan od.dgl., kann beim Weitertransport des Filterbandes der aus einem Gummimaterial bestehende Abdichtschlauch beschädigt werden, so daß der Wartungsaufwand und mithin die Stillstandszeiten dieser bekannten Anlage erhöht sind.

Ausgehend von diesem Stand der Technik liegt der Erfindung die Aufgabe zugrunde, eine Filtrieranlage zu schaffen, die eine kontinuierliche Filtrierung erlaubt, wobei gleichzeitig die angesprochene Durchtrittsstelle sicher dichtend verschlossen ist.

Diese Aufgabe löst eine Filtrieranlage mit den Merkmalen des Anspruches 1. Dadurch, daß gemäß dem kennzeichnenden Teil des Anspruches 1 die elastisch nachgiebigen Dichtmittel aus einzelnen Federelementen bestehen, die in Reihen hintereinander und in bestimmten Abständen voneinander auf dem Filterband angeordnet und mit diesem derart verbunden sind, daß beim Einfahren des Filterbandes in die Führung jedes der Einfahrstelle der Führung zugeführte Federelement eine durch die Federkraft erzeugte Vorspannung aufweist, die das Filterband dichtend gegen die Führung drückt, können die derart vorgespannten Federelemente auch längs des Durchganges zwischen Sammelbehälter und Absaugkammer kontinuierlich verfahren werden und schließen die mögliche Durchtrittsstelle dichtend ab. Mit der erfindungsgemäßen Filtrieranlage ist ein kontinuierliches Filtrieren bei gleichzeitiger Abdichtung der ungewollten Durchtrittsstelle möglich. Da die angesprochenen Federelemente im übrigen unempfindlich gegen den möglichen Späneanfall sind, ist die erfindungsgemäße Filtrieranlage wartungsarm und unnötige Stillstandszeiten sind mithin vermieden.

Bei einer bevorzugten Ausführungsform der erfindungsgemäßen Filtrieranlage besteht das jeweilige Federelement aus einem zweiarmigen Federbügel, der fest mit einem ihm zugeordneten, quer über das Filterband verlaufenden Steg verbunden ist, der mit anderen Stegen des Filterbandes eine Stegreihe ausbildet und die Führung weist zwei Führungsschienen auf, die mit ihren Öffnungsseiten einander zugewandt dem Wannenaufbau des Sammelbehälters nachfolgen. Durch die Stegreihe ist ein kontinuierlicher Austrag von den auf dem Filterband sich sammelnden Verschmutzungen möglich. Mit den Führungsschienen ist ein genaues Nachfahren des Filterbandes längs der Wannenkontur ermöglicht, ohne daß unzulässig hohe Zugbeanspruchungen auf das Filterband wirken.

Bei einer besonders bevorzugten Ausführungsform der erfindungsgemäßen Filtrieranlage weist bei einer Art der zweiarmigen Federbügel dieser endseitig jeweils eine Aufnahmestelle für die Lagerung mindestens einer Führungsrolle auf. Beim Einfahren der jeweiligen Führungsrolle in die angesprochene Führung spannt diese dann den Federbügel vor, so daß dieser mit seiner vorgegebenen Federkraft das Filterband abschließend gegen die Führung drückt.

Bei einer weiteren bevorzugten Ausführungsform der erfindungsgemäßen Filtrieranlage weist bei einer anderen Art der zweiarmigen Federbügel dieser endseitig jeweils ein Bügelsegment auf, das ausgehend von einer vorgegebenen Vorspannung mit Zunahme der Krümmung der Führung einen zunehmenden Anpreßdruck auf das Filterband in Richtung der Führung ausübt. Auch an Stellen der größten Umlenkung der Führung innerhalb des Sammelbehälters wird dann das Filterband sicher der Führung nachfolgend geführt, ohne daß es zu einem Abheben des Filterbandes an den Stellen der Umlenkung kommen kann. Hierdurch ist auch vermieden, daß das Filterband über den Antrieb schädigend große Zugspannungen erfährt. Vielmehr ist das Filterband längs seines gesamten Umlaufes "federnd nachgiebig" geführt.

Bei einer besonders bevorzugten Ausführungsform der erfindungsgemäßen Filtrieranlage weist die eine Art von Federbügeln jeweils zwei Rollenpaare auf und sind paarweise einander zugeordnet endseitig an jeweils einem Steg angeordnet, wobei zwischen ihnen die andere Art von Federbügeln ebenfalls paarweise einander zugeordnet auf demselben Steg festgelegt ist. Hierdurch sind platzsparend die notwendigen Federelemente auf engem Raum randseitig des Filterbandes zusammengefaßt und beeinträchtigen mithin nicht die notwendige Filtrierfläche des Filterbandes.

Bei einer weiteren besonders bevorzugten Ausführungsform der erfindungsgemäßen Filtrieranlage ist der jeweilige Steg aus zwei Winkeln gebildet, die jeweils über ein Winkelstück mit einer Filtermatte des Filterbandes verbunden sind und die jeweils über das andere Winkelstück von einer quer über das Filterband verlaufenden U-förmigen Profilleiste umgriffen sind, die Haltewinkel für das Festlegen der jeweiligen Federbügel aufweist. Das Filterband läßt sich dann vergleichbar einem Baukastensystem aus standardisierten Filtermatten unterschiedlicher Länge und Breite abhängig vom jeweiligen Einsatzzweck modular aufbauen.

Bei einer weiteren bevorzugten Ausführungsform der erfindungsgemäßen Filtrieranlage ist jede Art von Federbügeln in einer separaten Reihe angeordnet, die längs der Transportrichtung des Filterbandes verläuft, wobei der von dem jeweiligen Federbügel abgedeckte Bereich des Filterbandes undurchlässig ausgebildet ist. Auf diese Art und Weise wird ein gleichförmiger Krafteinfluß der Federelemente in den randseitigen Filterbandbereich ermöglicht.

Bei einer weiteren bevorzugten Ausführungsform der erfindungsgemäßen Filtrieranlage steht mindestens eine Führungsrolle eines jeden Federbügels der einen Art mit einem axialen Überstand über die seitliche Begrenzung des Filterbandes vor. Hierdurch ist ein bündiger Führungsabschluß von randseitigem Bandbereich mit der Zugeordneten Führungsschiene erreicht.

Bei einer weiteren bevorzugten Ausführungsform der erfindungsgemäßen Filtrieranlage weist jeder Steg endseitig einen über das Filterband vorstehenden Mitnahmezapfen auf, der mit dem Antrieb des Filterbandes zusammenwirkt. Die in einen Antriebskranz des Antriebes eingreifenden Mitnahmezapfen erlauben einen kontinuierlichen, hemmungsfreien und ruckfreien Transport des Filterbandes im Filtrierbetrieb. Vorzugsweise liegen zum Erzeugen der Vorspannung die jeweiligen Federkräfte der Federelemente zwischen 200 bis 2000 N.

Im folgenden ist die erfindungsgemäße Filtrieranlage anhand der Zeichnung näher erläutert.

Es zeigen teilweise in prinzipieller Darstellung und nicht maßstäblich die
- Fig.1: einen schematischen Längsschnitt durch die Filtrieranlage;
- Fig.2: eine Draufsicht auf einen Teil des Filterbandes;
- Fig.3: eine teilweise wiedergegebene Längsansicht des in der Führungsschiene geführten Filterbandes;
- Fig.4: einen vergrößerten Ausschnitt des mit "Z" bezeichneten Ovals in der Fig.3;
- Fig.5: eine Seitendarstellung der einen Art von Federelementen;
- Fig.6: eine Seitendarstellung des Filterbandes nach der Fig.2 in Richtung des Pfeiles "Y" gesehen;
- Fig.7: eine Seitendarstellung in Richtung des Pfeiles "X" in Fig.6 gesehen ohne Führungsrollen und ohne Federelemente.

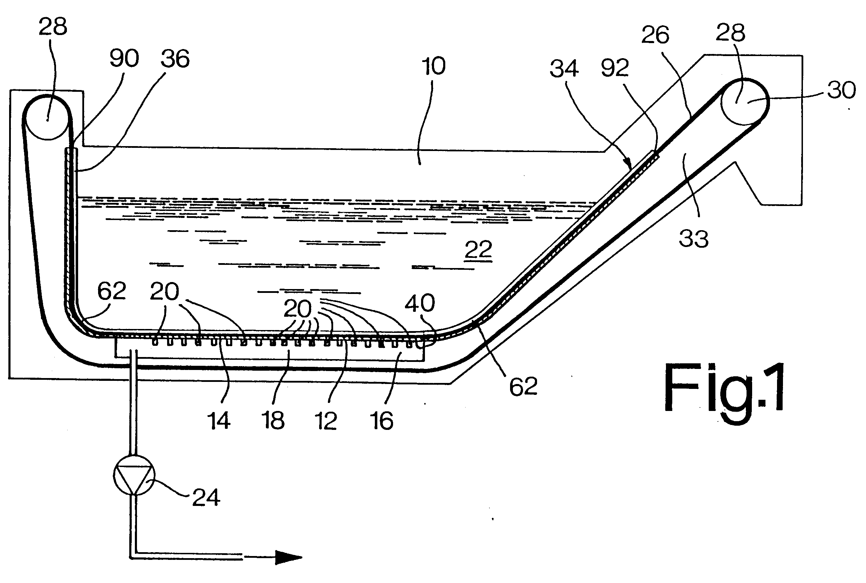

Die Fig.1 zeigt den prinzipiellen Aufbau der erfindungsgemäßen Filtrieranlage. Sie weist einen Sammelbehälter 10 auf, der wannenförmig ausgebildet ist. An seinem in der Fig.1 gesehen unteren Teil weist er ein Bodenteil 12, beispielsweise in Form eines Bodenbleches, auf. Dieser Bodenteil 12 ist von einem Durchgang 14 durchbrochen, der eine rechteckförmige Ausnehmung im Bodenteil 12 bildet. In der Fig.1 gesehen ist unterhalb dieses Durchganges 14 mittels einer Wanne 16, die Teil des wannenförmigen Sammelbehälters 10 ist, das Innere des Sammelbehälters 10 von der Umgebung außerhalb desselben getrennt. Der Inhalt dieser Wanne 16 bildet eine Absaugkammer 18 aus, die über den Durchgang 14 mit dem Inneren des Sammelbehälters 10 verbunden ist. Der Durchgang 14 ist von Stützelementen 20 durchzogen, die aus Stäben, beispielsweise Profilstäben, mit kreisrundem oder quadratischem Querschnitt gebildet sind und die im wesentlichen horizontal verlaufend mit ihren Enden an den Rändern des Durchganges 14 im Bodenteil 12 stationär gehalten sind. Die Stützelemente können jedoch auch durch einen Lochblechboden (nicht dargestellt) gebildet sein. Über eine nicht dargestellte Zuführstelle wird verschmutzte Kühlschmierstoffflüssigkeit, die die Suspension 22 bildet, von einer oder mehreren Bearbeitungsmaschinen (nicht dargestellt) in das Innere des Sammelbehälters 10 geleitet.

Das Innere der Absaugkammer 18 ist über eine Verbindungsleitung an eine Saugpumpe 24 angeschlossen, deren Ausgang an eine Verbraucherstelle, beispielsweise in Form der angesprochenen Bearbeitungsmaschinen, angeschlossen ist. Der Pfeil in der Fig.1 gibt dabei die Durchflußrichtung an, sofern die Saugpumpe 24 in Betrieb ist. Über die Saugpumpe 24 läßt sich ein Vakuum in der Absaugkammer 18 erzeugen, das die Filtration der Suspension 22 bewirkt.

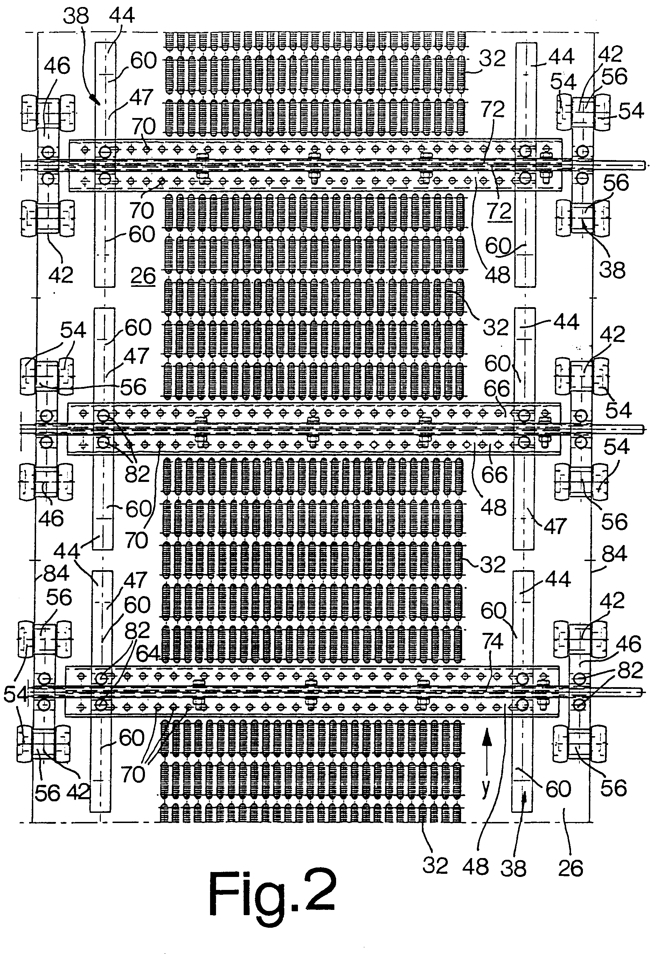

Die erfindungsgemäße Filtrieranlage weist ferner ein als Endlosband ausgebildetes Filterband 26 auf, das um entsprechende Umlenkstellen und Umlenkrollen 28 geführt in der Darstellung nach der Fig.1 mittels eines Antriebes 30 im Uhrzeigersinn transportierbar ist. Der einfacheren Darstellung wegen sind nicht alle Umlenkrollen gezeigt. Im Bereich des Durchganges 14, also im Bereich des Überganges zwischen dem Inneren des Sammelbehälters 10 und der Absaugkammer 18, ist dieses Endlosfilterband 26 mittels der Stützelemente 20 über diesen Durchgang 14 geführt. Das Filterband 26 weist eine durchlässige Perforierung 32 auf (s.Fig.2), die durchlässig ist und insbesondere von einem Filtermittel, beispielsweise in Form eines Drahtgewebes, abgedeckt ist. Der prinzipielle Aufbau eines dahingehenden Filtermittels in Form eines Filterbandes läßt sich aus der DE-A-40 19 500 der Anmelderin ersehen. Jedenfalls dient das Filtermittel oder Filtermaterial dazu, die Festteile der Suspension 22 in der Wanne des Sammelbehälters 10 zurückzuhalten, wohingegen die flüssigen Anteile und mithin der Reinanteil in die Wanne 16 der Absaugkammer 18 gelangt. Es ist also über die Perforierung 32 ständig eine durchgehende Verbindung zwischen dem Inneren des Sammelbehälters 10 und dem Inneren der Absaugkammer 18 hergestellt. Die Breite des Filterbandes 26 ist derart gewählt, daß es im Bereich des Durchganges 14 diesen mit einem gewissen Überhang an den Rändern des Durchganges 14 vollständig abdeckt.Der Schmutzaustrag der Festteile, wie Späne, erfolgt mittels des Filterbandes 26 über die Austragschräge 33 des Sammelbehälters 10.

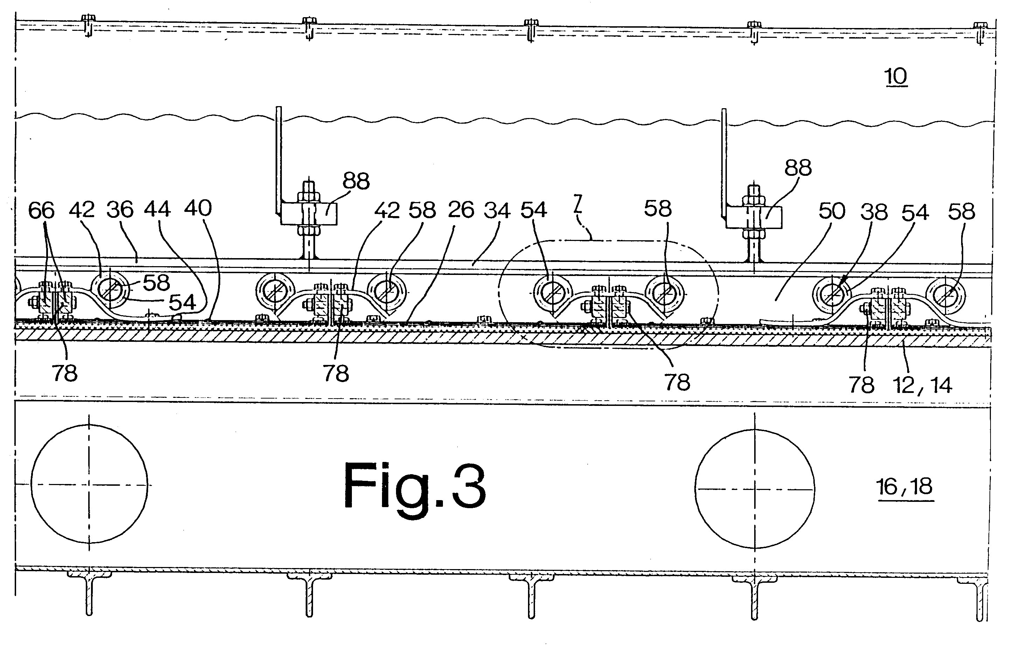

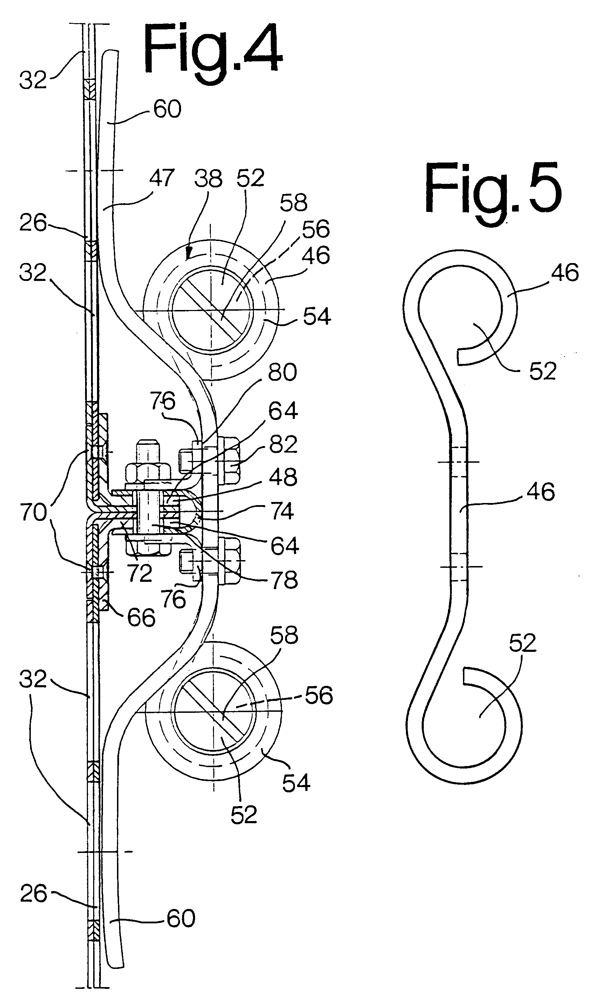

In dem Sammelbehälter 10 verläuft eine als Ganzes mit 34 bezeichnete Führung, die im wesentlichen zwei Führungsschienen 36 aufweist. Längs der Führung 34 oder der Führungsschienen 36 wird das Filterband 26 innerhalb des Sammelbehälters 10 im wesentlichen verfahren. Auf dem Filterband 26 (s. Fig.2) sind als Ganzes mit 38 bezeichnete, elastisch nachgiebige Dichtmittel vorhanden, die randseitig auf das Filterband 26 einwirkend eine ungewollte, jedoch mögliche Durchtrittsstelle 40 (s. Fig.1 und 3) zwischen dem Inneren des Sammelbehälters 10 und der Absaugkammer 18 dichtend verschließen. Wie insbesondere die Fig.2 zeigt, bestehen die elastisch nachgiebigen Dichtmittel aus einzelnen Federelementen 42,44, die in Reihen hintereinander und in vorgebbaren Abständen voneinander auf dem Filterband 26 fest angeordnet sind. Wie insbesondere die Fig.4 zeigt, besteht das jeweilige Federelement 42,44 aus einem zweiarmigen Federbügel 46,47, der fest mit einem ihm zugeordneten, quer über das Filterband 26 verlaufenden Steg 48 verbunden ist, der mit anderen Stegen 48 des Filterbandes 26 eine Stegreihe ausbildet.

Jede der beiden Führungsschienen 36 (s.Fig.3) bildet einen U-förmigen Profilquerschnitt aus, der mit seiner freien Öffnungsseite 50 der Öffnungsseite der anderen Führungsschiene 36 (nicht dargestellt) zugewandt ist und im übrigen, wie dies insbesondere die Fig.1 zeigt, dem bodenseitigen Wannenaufbau des Sammelbehälters 10 jeweils nachfolgt. Die verwendeten Federelemente 42,44 sind in zwei Arten unterscheidbar. Bei der einen Art der zweiarmigen Federbügel 46 weist dieser endseitig jeweils eine Aufnahmestelle 52 (s.Fig.5) für die Lagerung eines Führungsrollenpaares 54 (s.Fig.4) auf. Hierzu sind die beiden freien Enden des jeweils einstückig ausgebildeten Federbügels 46 längs eines Kreisbogens umgebogen. In die hierdurch gebildete Aufnahmestelle 52 greift ein zylindrischer Lagerbolzen 56 (s.Fig.2) ein, der jeweils endseitig mit einer Führungsrolle 54 derart verschraubt wird, daß die Rolle 54 sich um den stationär angeordneten Lagerbolzen 56 frei drehen kann. In der Zeichnung ist diese Schraubverbindung an dem Längsschlitz 58 für den Eingriff eines Schraubendrehers erkennbar.

Bei der anderen Art der zweiarmigen Federbügel 47 weist dieser endseitig jeweils ein Bügelsegment 60 auf (s.Fig.4), das ausgehend von einer vorgegebenen Vorspannung mit Zunahme der Krümmung 62 der Führung 34 einen zunehmenden Anpreßdruck auf das Filterband 26 in Richtung der Führung 34 ausübt. Hierzu drücken die einzelnen Bügelsegmente 60 in der Art eines Führungsschuhes auf die Oberseite des Filterbandes 26. Die angesprochene Krümmung 62 der Führung 34 ist besonders an der Stelle der 90°-Krümmung einlaufseitig und der 60°-Krümmung auslaufseitig des Sammelbehälters 10 (s.Fig.1) vorhanden und für eine saubere Führung des Filterbandes 26 zu beachten.

Wie insbesondere die Fig.2 zeigt, ist die eine Art von Federbügeln 46, die jeweils zwei Rollenpaare 54 aufweist, paarweise einander zugeordnet endseitig an jeweils einem Steg 48 angeordnet, wohingegen zwischen ihnen die andere Art von Federbügeln 47 ebenfalls paarweise einander zugeordnet auf demselben Steg 48 festgelegt ist. Der jeweilige Steg 48 ist aus zwei rechtwinkligen Winkeln 64 (s.Fig.4) gebildet, die jeweils über ein schenkelförmiges Winkelstück 66 mit einer zugeordneten Filtermatte, die segmentweise die Perforierung 32 aufweist, über eine Nietverbindung 70 fest verbunden sind. Das jeweils andere Winkelstück 72, das senkrecht auf dem Filterband 26 steht, ist mit dem ihm zugeordneten anderen Winkelstück 72 des paarweise zugeordneten Winkels 64 von einer quer über das Filterband 26 verlaufenden U-förmigen Profilleiste 74 umgriffen, die endseitig Haltewinkel 76 für das Festlegen der jeweiligen Federbügel 46,47 aufweist. Für die Verbindung der jeweiligen Profilleiste 74 mit den beiden Winkelstücken 66 des Steges 48 ist eine Schraubverbindung 78 vorgesehen.

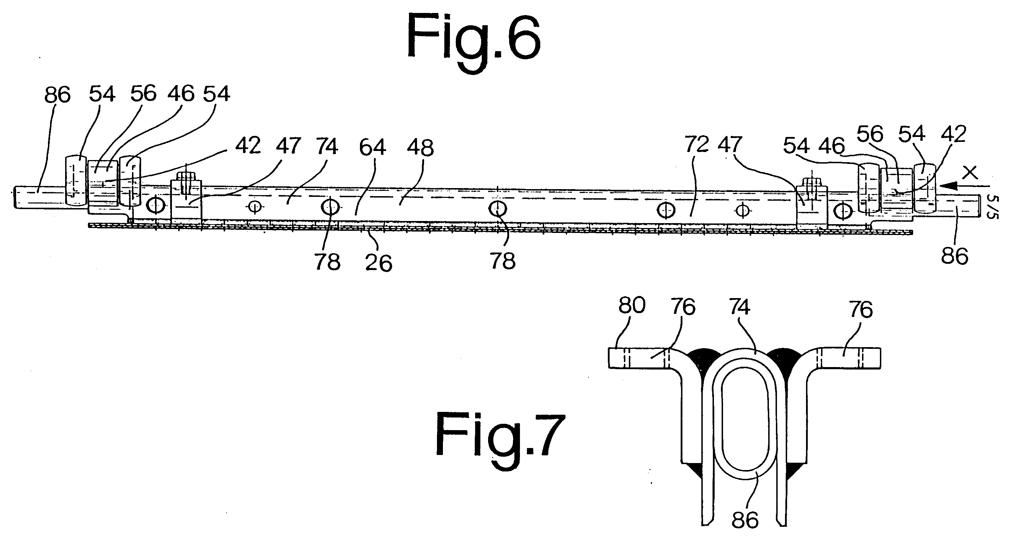

Jede Art von Federbügeln 46,47 ist in einer separaten Reihe (s.Fig.2) angeordnet, die längs der Transportrichtung des Filterbandes 26 verläuft, die in der Fig.2 mit "Y" gekennzeichnet ist. Der von dem jeweiligen Federbügel 46 und 47 abgedeckte randseitige Bereich des Filterbandes 26 ist undurchlässig ausgebildet und gewährleistet mit einen hermetischen Abschluß an der Stelle des Überganges zwischen Sammelbehälter 10 und Saugkammer 18, die nicht von der Perforierung 32 abgedeckt ist. Wie sich insbesondere aus der Fig.7 ergibt, lassen sich die jeweiligen Haltewinkel 76 vorzugsweise mittels einer Schweißverbindung mit dem jeweiligen Steg 48 oder der zugeordneten Profilleiste 74 fest verbinden. Ein Paar zugeordneter Haltewinkel 76 bildet dann eine ebene Auflagefläche 80 aus, die parallel zu der Oberseite des Filterbandes 26 ausgerichtet ist und mithin im wesentlichen horizontal verläuft, wobei über eine Schraubenverbindung 82 sich dann die beiden Arten an Federbügeln 46 und 47 festlegen lassen.

Mindestens eine Führungsrolle 54 eines jeden Federbügels 46 der einen Art steht mit einem axialen Überstand über die seitliche Randbegrenzung 84 des Filterbandes 26 vor; ist jedoch zusammen mit der anderen Führungsrolle 54 eines Führungsrollenpaares in der jeweils zugeordneten Führungsschiene 36 (s.Fig.3) geführt.

Für den Antrieb des Filterbandes 26 weist jeder Steg 48 endseitig einen über das Filterband 26 randseitig vorstehenden Mitnahmezapfen 86 (s.Fig.6 und 7) auf, der oval ausgebildet von der bügelartigen Profilleiste 74 nach oben hin umfaßt ist und über eine Schweißverbindung (nicht dargestellt) mit den Enden des Steges 46 fest verbunden ist. Die jeweilige Führungsschiene 36 läßt sich über Einstell- und Dämpferelemente 88 (s.Fig.3) der Höhe nach einstellen und mithin in eine genau fluchtende Anlage mit der jeweils anderen Führungsschiene 36 der Führung 34 bringen.

Läuft das vorstehend beschriebene Filterband 26 mit seinen Federelementen 42 und 44 an der mit 90 bezeichneten Einfahrstelle (s.Fig.1) in die Führung 34 ein, wird das jeweils einlaufende Führungsrollenpaar 54 entgegen der Wirkung des Federelementes 42 in die zugeordnete Führungsschiene 36 "gepreßt" und mithin der zugeordnete Federbügel 46 vorgespannt. Aufgrund dieser Vorspannung drückt der jeweilige Federbügel 46 des Federelementes 42 wiederum die Führungsrollenpaare 54 gegen die Oberseite der Führungsschiene 36 mit dem Erfolg, daß die Unterseite des Filterbandes 26 gegen die Unterseite der Führung 34 dichtend gepreßt wird. Die Feder- oder Vorspannkraft für jeden Arm des dahingehenden zweiarmigen Federbügels 46 kann ohne weiteres bis zu 600 N betragen. An der der Einlaufstelle 90 gegenüberliegenden Auslaufstelle 92 der Führung 34 geraten die jeweiligen Führungsrollenpaare 54 wieder außer Eingriff und mithin entspannen sich die zugeordneten Federelemente 42.

Bei den anderen Federelementen 44 drückt bereits vor Erreichen der Einlaufstelle 90 die andere Art von Federbügeln 47 mit ihren Bügelsegmenten 60 gegen die Oberseite des Filterbandes 26. Hier beträgt die Vorspann- oder Federkraft pro Bügelsegment 60 je nach Einstellung ca. 100 bis 300, vorzugsweise 200 N. An Stellen negativer Krümmung, wie beispielsweise an der 90°-Umlenkung 62 innerhalb der Führung 34, erhöht sich die soeben beschriebene Vorspannkraft und das Filterband 26 wird verstärkt in seiner Bahnrichtung in der Führung 34 ohne abzuheben gehalten. In nicht ganz so starkem Umfang gilt dies auch für die Krümmung 62 vor der Austragschräge 33 des Sammelbehälters 10. Bei positiver Krümmung, beispielsweise an den Stellen der Umlenkung bei den Umlenkrollen 28, heben die Bügelsegmente 60 von dem Filterband 26 ab und legen sich nach der Umlenkung wieder mit ihrer Vorspannung auf das Filterband 26 auf. An den geradlinig verlaufenden Streckenabschnitten beim Transport des Filterbandes 26 verbleiben jedoch die andere Art der Federelemente 44 mit ihrer definierten Vorspannkraft unmittelbar auf dem Filterband 26, sofern das Filterband 26 sich auf einer Unterlage, wie beispielsweise einer weiteren Führung (nicht dargestellt) abstützt. Die in der Fig.1 wiedergegebene Führung 34 kann verkürzt und insbesondere nur im Bereich des Durchganges 14 vorhanden sein (s.Fig.3).

Trotz der hohen Vorspannkräfte ist mit der erfindungsgemäßen Filtrieranlage der kontinuierliche Förderaustrag mit dem Filterband 26 nicht behindert. Ferner braucht die beschriebene Anordnung einer Filtrieranlage nicht auf die Unterdruck-Bandfilteranlage nach der Fig.1 beschränkt zu sein, sondern kann grundsätzlich dort Anwendung finden, wo ein dichtender Abschluß eines Filterbandes mit der Umgebung erreicht werden soll. Um einer möglichen Korrosion vorzubeugen, sind die Federelemente aus Edelstahl gebildet.

## Patentansprüche

1. Filtrieranlage zum Abfiltrieren einer Flüssigkeit aus einer Suspension, mit einem Sammelbehälter (10) zur Aufnahme der Suspension, der über mindestens einen Durchgang (14) mit einer Absaugkammer (18) verbunden ist, in der ein Unterdruck erzeugbar ist, wobei der jeweilige Durchgang (14) von einem endlosen Filterband (26) abgedeckt ist, das mittels eines Antriebes (30) in einer zumindest teilweise innerhalb des Sammelbehälters (10) angeordneten Führung (34) verfahrbar ist und wobei elastisch nachgiebige Dichtmittel (38) vorhanden sind, die randseitig auf das Filterband (26) einwirkend eine ungewollte Durchtrittsstelle (40) für die Flüssigkeit zwischen dem Inneren des Sammelbehälters (10) und der Absaugkammer (18) dichtend verschließen, dadurch gekennzeichnet, daß die elastisch nachgiebigen Dichtmittel (38) aus einzelnen Federelementen (42,44) bestehen, die in Reihen hintereinander und in bestimmten Abständen voneinander auf dem Filterband (26) angeordnet und mit diesem derart verbunden sind, daß beim Einfahren des Filterbandes (26) in die Führung (34) jedes der Einfahrstelle (90) der Führung (34) zugeführte Federelement (42,44) eine durch die Federkraft erzeugte Vorspannung aufweist, die das Filterband (26) dichtend gegen die Führung (34) drückt, und daß die Federelemente (42,44) beim Bewegen des Filterbandes (26) mit dem Filterband (26) mitbewegen.

2. Filtrieranlage nach Anspruch 1, dadurch gekennzeichnet, daß das jeweilige Federelement (42,44) aus einem zweiarmigen Federbügel (46,47) besteht, der fest mit einem ihm zugeordneten, quer über das Filterband (26) verlaufenden Steg (48) verbunden ist, der mit anderen Stegen (48) des Filterbandes (26) eine Stegreihe ausbildet und daß die Führung (34) zwei Führungsschienen (36) aufweist, die mit ihren Öffnungsseiten (50) einander zugewandt dem Wannenaufbau des Sammelbehälters (10) nachfolgen.

3. Filtrieranlage nach Anspruch 2, dadurch gekennzeichnet, daß bei einer Art der zweiarmigen Federbügel (46) dieser endseitig jeweils eine Aufnahmestelle (52) für die Lagerung mindestens einer Führungsrolle (54) aufweist.

4. Filtrieranlage nach Anspruch 2, dadurch gekennzeichnet, daß bei einer anderen Art der zweiarmigen Federbügel (47) dieser endseitig jeweils ein Bügelsegment (60) aufweist, das ausgehend von einer vorgegebenen Vorspannung mit Zunahme der Krümmung (62) der Führung (34) einen zunehmenden Anpreßdruck auf das Filterband (26) in Richtung der Führung (34) ausübt.

5. Filtrieranlage nach Anspruch 4, dadurch gekennzeichnet, daß die eine Art von Federbügeln (46) jeweils zwei Rollenpaare (54) aufweist und paarweise einander zugeordnet endseitig an jeweils einem Steg (48) angeordnet sind und daß zwischen ihnen die andere Art von Federbügeln (47) ebenfalls paarweise einander zugeordnet auf demselben Steg (48) festgelegt sind.

6. Filtrieranlage nach Anspruch 5, dadurch gekennzeichnet, daß der jeweilige Steg (48) aus zwei Winkeln (64) gebildet ist, die jeweils über ein Winkelstück (66) mit einer Filtermatte des Filterbandes (26) verbunden sind und die jeweils über das andere Winkelstück (72) von einer quer über das Filterband (26) verlaufenden U-förmigen Profilleiste (74) umgriffen sind, die Haltewinkel (76) für das Festlegen der jeweilige Federbügel (46,47) aufweist.

7. Filtrieranlage nach einem der Ansprüche 4 bis 6, dadurch gekennzeichnet, daß jede Art von Federbügeln (46,47) in einer separaten Reihe angeordnet ist, die längs der Transportrichtung des Filterbandes (26) verläuft, und daß der von dem jeweiligen Federbügel (46,47) abgedeckte Bereich des Filterbandes (26) undurchlässig ausgebildet ist.

8. Filtrieranlage nach einem der Ansprüche 3 bis 7, dadurch gekennzeichnet, daß mindestens eine Führungsrolle (54) eines jeden Federbügels (46) der einen Art mit einem axialen Überstand über die seitliche Begrenzung (84) des Filterbandes (26) vorsteht.

9. Filtrieranlage nach einem der Ansprüche 2 bis 8, dadurch gekennzeichnet, daß jeder Steg (48) endseitig einen über das Filterband (26) vorstehenden Mitnahmezapfen (86) aufweist, der mit dem Antrieb (30) des Filterbandes (26) zusammenwirkt.

10. Filtrieranlage nach einem der Ansprüche 1 bis 9, dadurch gekennzeichnet, daß zum Erzeugen der Vorspannung die jeweiligen Federkräfte der Federelemente (42,44) zwischen 200 bis 2000 N liegen.

## Claims

1. Filtering device for filtering off a liquid from a suspension with a collecting container (10) for receiving the suspension, which is connected by way of at least one passage (14) to a suction chamber (18), in which a reduced pressure can be produced, the respective passage (14) being covered by an endless filter belt (26), which can be moved by means of a drive (30) in a guide (34) located at least partly inside the collecting container (10) and elastically yielding sealing means (38) being provided, which, acting on the edge side on the filter belt (26) hermetically seal an undesired penetration point (40) for the liquid between the inside of the collecting container (10) and the suction chamber (18), characterised in that the elastically yielding sealing means (38) consist of individual spring members (42, 44), which are arranged in rows one behind the other and at certain distances from each other on the filter band (26) and are connected to the latter so that at the time of introduction of the filter band (26) into the guide (34), each spring member (42, 44) supplied to the introduction point (90) of the guide (34) has a pre-tension produced by the spring force, which presses the filter band (26) hermetically against the guide (34) and that the spring members (42, 44), at the time of movement of the filter band (26), move together with the filter band (26).

2. Filtering device according to Claim 1, characterised in that the respective spring member (42, 44) consists of a two-armed spring clip (46, 47), which is securely connected to a web (48) associated therewith and extending transversely over the filter band (26), which web, with other webs (48) of the filter band (26), forms a row of webs and that the guide (34) comprises two guide rails (36), which with their opening sides (50) facing each other, follow the trough construction of the collecting container (10).

3. Filtering device according to Claim 2, characterised in that in one type of the two-armed spring clip (46), on its end side the latter comprises respectively one receiving point (52) for mounting at least one guide roller (54).

4. Filtering device according to Claim 2, characterised in that with another type of two-armed spring clip (47), on its end sides the latter respectively comprises a clip segment (60), which starting with a predetermined pre-tension with the increase of the curvature (62) of the guide (34) exerts an increasing contact pressure on the filter band (26) in the direction of the guide (34).

5. Filtering device according to Claim 4, characterised in that one type of spring clip (46) respectively comprises two pairs of rollers (54) and associated with each other in pairs are arranged at the end side on respectively one web (48) and that fixed between them are the other type of spring clip (47), likewise associated with each other in pairs, on the same web (48).

6. Filtering device according to Claim 5, characterised in that the respective web (48) is formed from two angles (64), which are connected respectively by way of an angle member (66) to a filter mat of the filter band (26) and which are surrounded respectively by way of the other angle member (72) by a U-shaped profile bar (74) extending transversely over the filter band (26), which profiled bar comprises retaining angles (76) for fixing the respective spring clips (46, 47).

7. Filtering device according to one of Claims 4 to 6, characterised in that each type of spring clip (46, 47) is arranged in a separate row, which extends along the conveying direction of the filter band (26) and that the region of the filter band (26) covered by the respective spring clip (46, 47) is constructed to be non-permeable.

8. Filtering device according to one of Claims 3 to 7, characterised in that at least one guide roller (54) of each spring clip (46) of one type projects by an axial extent beyond the lateral boundary (84) of the filter band (26).

9. Filtering device according to one of Claims 2 to 8, characterised in that on the end side, each web (48) comprises an entrainment journal (86) projecting beyond the filter band (26), which journal cooperates with the drive (30) of the filter band (26).

10. Filtering device according to one of Claims 1 to 9, characterised in that for producing the pre-tension, the respective spring forces of the spring members (42, 44) lie between 200 and 2000 N.

## Revendications

1. Dispositif de filtrage destiné à filtrer un liquide dans une suspension, comprenant un réservoir de stockage (10) contenant la suspension, lequel communique par l'intermédiaire d'au moins une section de passage (14) avec une chambre d'aspiration (18), dans laquelle il est possible de produire une dépression, chaque section de passage (14) étant fermée par une bande filtrante (26) continue qui, par l'action d'un moteur (30), peut se déplacer dans un système de guidage (34) monté au moins en partie à l'intérieur du réservoir de stockage (10) et dans lequel sont prévus des moyens d'étanchéité élastiques (38), qui en agissant sur le bord de la bande filtrante (26) ferment hermétiquement une zone de pénétration (40) indésirable pour le liquide, située entre l'intérieur du réservoir de stockage (10) et la chambre d'aspiration (18), caractérisé en ce que les moyens d'étanchéité élastiques (38) sont constitués par divers éléments de ressort (42, 44), qui sont disposés en rangées les uns derrière les autres et à intervalles réguliers définis les uns par rapport aux autres sur la bande filtrante (26) et sont assemblés avec cette dernière de telle sorte que, lorsque la bande filtrante (26) pénètre dans le système de guidage (34), chaque élément de ressort (42, 44) guidé vers la zone d'entrée (90) du système de guidage (34) est précontraint par l'action du ressort, qui serre la bande filtrante (26) de manière étanche contre le système de guidage (34), et en ce que les éléments de ressort (42, 44) sont entraînés avec la bande filtrante (26) pendant le déplacement de la bande filtrante (26).

2. Dispositif de filtrage selon la revendication 1, caractérisé en ce que chaque élément de ressort (42, 44) est formé par une bride de ressort (46, 47) à deux branches, qui est assemblée de manière fixe à une traverse (48) correspondante, transversale à la bande filtrante (26), laquelle traverse forme une rangée de traverses avec les autres traverses (48) de la bande filtrante (26), et en ce que le système de guidage (34) est muni de deux rails de guidage (36), qui sont orientés l'un vers l'autre avec leurs côtés ouverts et suivent la forme de la cuvette formée par le réservoir de stockage (10).

3. Dispositif de filtrage selon la revendication 2, caractérisé en ce que l'un des deux types de bride de ressort (46) à deux branches comporte sur chaque extrémité une zone de réception (52) dans laquelle est logé au moins un galet de guidage (54).

4. Dispositif de filtrage selon la revendication 2, caractérisé en ce qu'un autre type de bride de ressort (47) à deux branches comporte à chaque extrémité une branche d'étrier (60) qui, à partir d'une précontrainte prédéterminée, exerce sur la bande filtrante (26), dans le sens de guidage, une force de pression qui croît avec l'augmentation de la courbure (62) du système de guidage (34).

5. Dispositif de filtrage selon la revendication 4, caractérisé en ce que l'un des deux types de bride de ressort (46) est toujours muni de deux paires de galets (54), qui sont disposés par paires, l'une orientée vers l'autre, sur la même traverse (48) et en ce que, entre ladite paire de brides de ressort, est fixé l'autre type de bride de ressort (47), également disposé par paire, l'une en face de l'autre, sur la même traverse (48).

6. Dispositif de filtrage selon la revendication 5, caractérisé en ce que chaque traverse (48) est formée par deux cornières (64), qui sont assemblées chacune, par une partie de la cornière (66), avec un treillis de filtrage de la bande filtrante (26) et qui sont entourées chacune sur l'autre partie de la cornière (72) par une barre profilée (74) en forme de U, transversale à la bande filtrante (26), laquelle barre profilée est munie de cornières de blocage (76) destinées à fixer chaque bride de ressort (46, 47).

7. Dispositif de filtrage selon l'une quelconque des revendications 4 à 6, caractérisé en ce que chaque type de bride de ressort (46, 47) est disposé dans une rangée séparée, qui est ordonnée dans le sens longitudinal du transport de la bande filtrante (26), et en ce que la zone de la bande filtrante (26) recouverte par chaque bride de ressort (46, 47) est imperméable.

8. Dispositif de filtrage selon l'une quelconque des revendications 3 à 7, caractérisé en ce qu'au moins un galet de guidage (54) d'une bride de ressort (46) de l'un des deux types forme une saillie dans le sens axial par rapport à la zone de bordure latérale (84) de la bande filtrante (26).

9. Dispositif de filtrage selon l'une quelconque des revendications 2 à 8, caractérisé en ce que chaque traverse (48) est munie à son extrémité d'un tenon d'entraînement (86) en saillie au-delà de la bande filtrante (26), lequel tenon agit conjointement avec le moteur (30) de la bande filtrante (26).

10. Dispositif de filtrage selon l'une quelconque des revendications 1 à 9, caractérisé en ce que les forces exercées par les éléments de ressort (42, 44) pour créer la précontrainte sont comprises de préférence entre 200 et 2000 N.
